(19) Europäisches Patentamt
European Patent Office
Office européen des brevets

(11) **EP 4 068 114 A1**

(12) **EUROPEAN PATENT APPLICATION**
published in accordance with Art. 153(4) EPC

(43) Date of publication:
**05.10.2022 Bulletin 2022/40**

(21) Application number: **20899697.5**

(22) Date of filing: **08.12.2020**

(51) International Patent Classification (IPC):
**G06F 16/532** (2019.01)          **G06F 16/58** (2019.01)
**G06F 40/289** (2020.01)          **G06F 40/30** (2020.01)

(86) International application number:
**PCT/CN2020/134620**

(87) International publication number:
**WO 2021/115277 (17.06.2021 Gazette 2021/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.12.2019 CN 201911261651**

(71) Applicant: **GUANGDONG OPPO MOBILE TELECOMMUNICATIONS CORP., LTD.**
**Dongguan, Guangdong 523860 (CN)**

(72) Inventors:
• **LI, Han**
  **Dongguan, Guangdong 523860 (CN)**
• **JIANG, Yi**
  **Dongguan, Guangdong 523860 (CN)**
• **LI, Yaqian**
  **Dongguan, Guangdong 523860 (CN)**

(74) Representative: **Ipside**
**7-9 Allées Haussmann**
**33300 Bordeaux Cedex (FR)**

(54) **IMAGE RETRIEVAL METHOD AND APPARATUS, STORAGE MEDIUM, AND ELECTRONIC DEVICE**

(57) An image retrieval method and apparatus, a storage medium, and an electronic device. The image retrieval method comprises: receiving an input retrieval request for an image (101); recognizing whether a retrieval target carried in the retrieval request is a retrieval term or a retrieval sentence (102); if the retrieval target is a retrieval term, retrieving an image of an image category and/or image object matching the retrieval term (103), and if the retrieval target is a retrieval sentence, retrieving an image having image semantics matching the retrieval sentence (104).

FIG. 1

**EP 4 068 114 A1**

**Description**

**CROSS REFERENCE TO RELATED APPLICATIONS**

This application claims priority to Chinese Patent Application No.201911261651.5 filed on December 10, 2019, entitled "image retrieving method and apparatus, storage media and electronic device", the contents of which may be herein incorporated by reference in their entireties.

**TECHNICAL FIELD**

The application relates to the field of image processing, and specifically to an image retrieving method and apparatus, a storage medium, and an electronic device.

**BACKGROUND**

At present, people cannot live without electronic devices such as smartphones, tablet PCs, and the like, which provide a wide range of functions that enable people to entertain and work anywhere and anytime. For example, users can store a large number of images (e.g. photographed images, images downloaded from the internet, etc.) on their electronic devices, so that the images can be viewed anywhere and anytime. In order to facilitate the browsing of specific images, in the related art, image retrieval solution based on time and location may be provided. In the image retrieval solution, the location and the time are obtained from existing information in the image properties, allowing the user to enter desired "time" or "location" to retrieve corresponding images for viewing.

**SUMMARY**

The present disclosure provides an image retrieving method and apparatus, a storage medium, and an electronic device, which enables flexible image retrieval.

In some aspects of the present disclosure, an image retrieving method is provided. The method is applied to an electronic device. The image retrieving method includes: receiving an input request for retrieving images; identifying whether a retrieve target carried by the request is a retrieve word or a retrieve sentence; in response to the retrieve target being the retrieve word, retrieving images with an image category and/or an image object matching the retrieve word; and in response to the retrieve target being a retrieve sentence, retrieving images with image semantics matching the retrieve sentence.

In some aspects of the present disclosure, an image retrieving apparatus may be provided, and the image retrieving apparatus may be applied in an electronic device. The image retrieving apparatus includes:

a request receiving module, configured to receive an input request for retrieving images; a target identifying module, configured to identify whether a retrieve target carried by the request is a retrieve word or a retrieve sentence; a first retrieving module, configured to retrieve images with an image category and/or an image object matching the retrieve word in response to the retrieve target being the retrieve word; and a second retrieving module, configured to retrieve images with image semantics matching the retrieve sentence in response to the retrieve target being the retrieve sentence.

In some aspects of the present disclosure, a storage medium may be provided. A computer program is stored on the storage medium, which when the computer program is loaded by a processor, the processor is caused to perform the image retrieving method as provided in any of the embodiments of the present disclosure.

In some aspects of the present disclosure, an electronic device may be provided. The electronic device includes a processor and a memory, the memory stores a computer program, the processor is configured to perform the image retrieving method as provided in any of the embodiments of the present disclosure by loading the computer program.

**BRIEF DESCRIPTION OF THE DRAWINGS**

In order to illustrate more clearly the technical solutions in the embodiments of the present disclosure, the following is a brief description of the accompanying drawings used in the description of the embodiments. Obviously, the drawings are only some of the embodiments of the present disclosure, and other drawings may be obtained from these drawings without creative work by those skilled in the art.

FIG. 1 is a schematic flowchart of an image retrieving method of some embodiments of the present disclosure.
FIG. 2 is an illustrative view of an image retrieving interface provided by an electronic device in some embodiments of the present disclosure.
FIG. 3 is an illustrative view of an image stored locally in the electronic device in some embodiments of the present disclosure.
FIG. 4 is a schematic flowchart of an image retrieving method according to some embodiments of the present disclosure.
FIG. 5 is a schematic structural view of an image retrieving apparatus of some embodiments of the present disclosure.
FIG. 6 is a schematic structural view of the electronic device of some embodiments of the present disclosure.

## DETAILED DESCRIPTION

As shown in the drawings, same symbols represent same components, principles of some embodiments of the present disclosure are illustrated by way of an example implemented in an appropriate computing environment. The following description is specific embodiments of the present disclosure for illustration, which should not be regarded as limiting other specific embodiments of the present disclosure not detailed herein.

Embodiments of the present disclosure relate to an image retrieving method and apparatus, a storage medium, and an electronic device. The image retrieving method may be performed by an image retrieving apparatus provided by some embodiments of the present disclosure, or an electronic device integrated with the image retrieving apparatus. The image retrieving apparatus may be implemented in a hardware or software manner. The electronic device may be a device equipped with a processor and having processing capacity, such as a smartphone, a tablet computer, a handheld computer, a laptop computer, or a desktop computer, etc.

In some aspects of the present disclosure, an image retrieving method may be provided. The method may be applied to electronic device. The method may include: receiving an input request for retrieving images; identifying whether a retrieve target carried by the request is a retrieve word or a retrieve sentence; in response to the retrieve target being the retrieve word, retrieving images with an image category and/or an image object matching the retrieve word; and in response to the retrieve target being the retrieve sentence, retrieving images with image semantics matching the retrieve sentence.

In some embodiments, the retrieving images with image semantics matching the retrieve sentence includes: sending the retrieve sentence to a semantic matching server, instructing the semantic matching server to match target-image semantics having similarity degrees to semantics of the retrieve sentence not less than a first predetermined similarity degree; and obtaining image identifiers corresponding to the target-image semantics from the semantic matching server and retrieving the images corresponding to the image identifiers.

In some embodiments, the image retrieving method provided by the present disclosure further includes: performing a segmenting process for the retrieve sentence, to obtain a plurality of segment words; obtaining first similar words having similarity degrees to semantics of the plurality of segment words not less than a second predetermined similarity degree; replacing the plurality of segment words of the retrieve sentence by the first similar words, to obtain extended retrieve sentences; and recommending the extended retrieve sentences.

In some embodiments, after the retrieving images with image semantics matching the retrieve sentence, the method further includes: showing the retrieved images. The recommending the extended retrieve sentences includes: recommending the extended retrieve sentences while showing the retrieved images.

In some embodiments, the image retrieving method further includes: obtaining second similarity words having similarity degrees to semantic of the retrieve word not less than a third predetermined similarity degree; and regarding the second similarity words as extended retrieve words, and recommending the extended retrieve words.

In some embodiments, the image retrieving method further includes: acquiring to-be-labeled images which need to be labeled during an image-labeling period; classifying the to-be-labeled images based on an image classification model, and obtaining image categories of the to-be-labeled images; performing object recognition for the to-be-labeled images based on an object recognition model, and obtaining objects included in the to-be-labeled images; and performing image-semantics recognition for the to-be-labeled images based on an image-semantics recognition model, and obtaining image semantics of the to-be-labeled images.

In some embodiments, the performing image-semantics recognition for the to-be-labeled images based on an image-semantics recognition model, and obtaining image semantics of the to-be-labeled images includes: sending the to-be-labeled images to an image-semantics recognition server, instructing the image-semantics recognition server to invoke an image-semantics recognition model for performing image-semantics recognition for the to-be-labeled images, and obtaining image semantics of the to-be-labeled images; and obtaining the image semantics of the to-be-labeled images from the image-semantics recognition server.

In some embodiments, the acquiring to-be-labeled images which need to be labeled includes: regarding new-added images during the image-labeling period as the to-be-labeled images.

In some embodiments, the identifying whether a retrieve target carried by the request is a retrieve word or a retrieve sentence includes: comparing the retrieve target with common words pre-stored in a thesaurus, determining that the retrieve target is a retrieve word in response to the retrieve target being one of the common words pre-stored in the thesaurus, and determining that the retrieve target is a retrieve sentence in response to the retrieve target not being one of the common words pre-stored in the thesaurus.

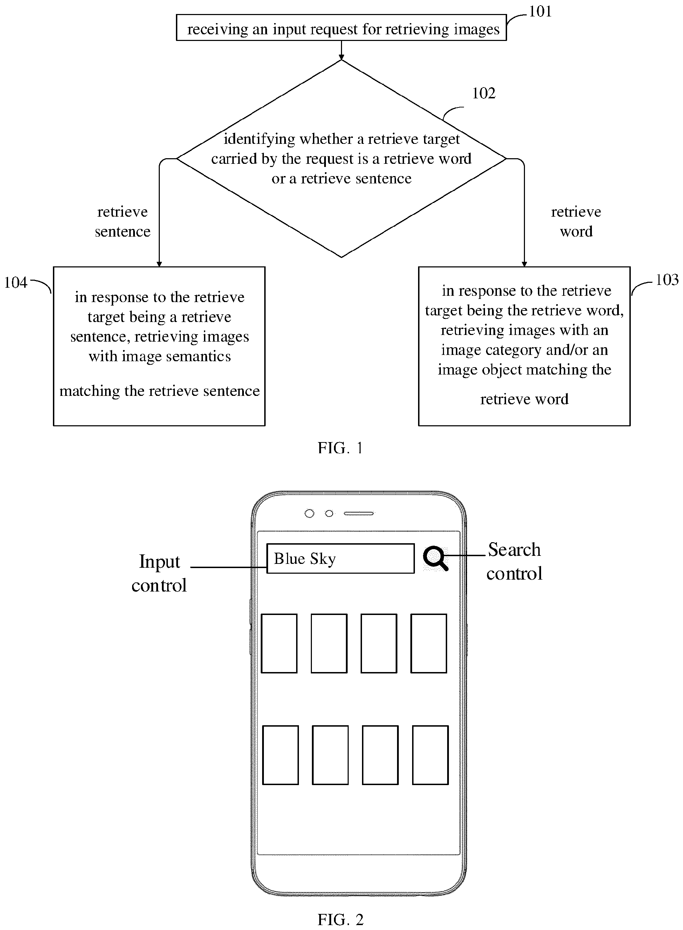

As shown in FIG. 1, FIG. 1 is a schematic flowchart of an image retrieving method of some embodiments of the present disclosure. Specific operations of the image retrieving method provided by some embodiments of the present disclosure may be include the following.

In operation 101, receiving an input request for retrieving images.

It should be noted that, the request for retrieving images may be input by various methods which may include but be not limited to voice input methods, touch input methods, etc., which may not be limited in some embodiments of the present disclosure.

For example, a user may speak a voice "find an image of **". When the electronic device receives the voice, the electronic device may parse the voice into the request for retrieving images.

As shown in FIG. 2, for another example, the electronic device is provided with an image retrieving interface. The image retrieving interface may include an input control in form of an input box. The user may enter a retrieve target for describing a desired image via the input control, such as a retrieve word and a retrieve sentence. In addition, the image retrieving interface is provided with a search control. After the user has input the retrieve target via the input control, the search control may be triggered to generate the request for retrieving images. The request for retrieving images includes a retrieve target input by the user. The retrieve target may be a retrieve word or a retrieve sentence.

In operation 102, identifying whether a retrieve target carried by the request is a retrieve word or a retrieve sentence.

In some embodiments, after receiving the input request for retrieving images, the electronic device further identifies whether the retrieve target carried by the request is the retrieve word or the retrieve sentence.

Exemplarily, after receiving the input request for retrieving images, the electronic device may parse the retrieve target carried by the request, compare the retrieve target with common words pre-stored in a thesaurus, and determine that the retrieve target is a retrieve word in response to the retrieve target being one of the common words pre-stored in the thesaurus, otherwise determine that the retrieve target is a retrieve sentence in response to the retrieve target not being one of the common words pre-stored in the thesaurus.

It will be appreciated that those skilled in the art may also define the ways in which the retrieve words and the retrieve sentences are divided according to practical needs, which will not be specifically limited in some embodiments of the present disclosure.

In operation 103, in response to the retrieve target being the retrieve word, retrieving images with an image category and/or an image object matching the retrieve word.

It should be noted that in order to enable image retrieving, the images in some embodiments of the present disclosure are pre-labeled in different dimensions, including at least image categories, image objects, and image semantics. The images are labeled in manual ways, machine labeling ways, or the like, which may not be specifically limited in some embodiments of the present disclosure.

In some embodiments, an image category may be configured to describe a category of a body in an image. An image object is configured to describe an object present in the image. The image category and the image object are represented by corresponding words. The image semantics is configured to describe content occurred in an image and represented by sentences.

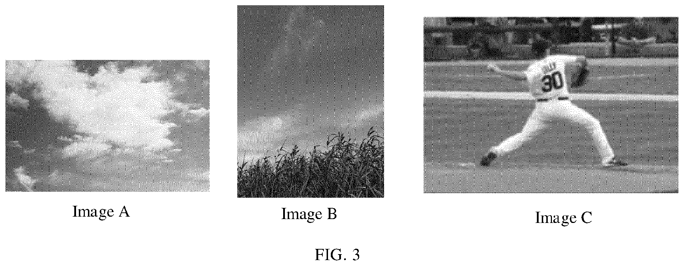

For example, as shown in FIG. 3, three images are used to illustrate the present disclosure in multiple dimensions involved. In some embodiments, the image category of an image A may be blue sky, the image objects of an image B may include "blue sky" and "reeds", and the image semantics of an image C may be "baseball player is throwing a ball".

Accordingly, in some embodiments of the present disclosure, when identifying that the retrieve target carried by the request is the retrieve word, the electronic device may locally retrieve images with an image category and/or an image object matching the retrieve word. It should be noted that the image category matching the retrieval word may be that the image category is identical to the retrieval word, or that the similarity degrees between the image category and the retrieval word reaches or is not less than a first predetermined similarity degree. The first predetermined similarity degree may be set by those skilled in the art according to practical needs, and may not be specifically limited in some embodiments of the present disclosure.

For example, taking the three images shown in FIG. 3 as an example, when the retrieve target carried by the request is "blue sky", the electronic device may identify the retrieve object as the retrieve word. An image A having an image category matching the image category "blue sky" and an image B having an image object matching the image object "blue sky" may be retrieved as a retrieved result. In operation 104, in response to the retrieve target being a retrieve sentence, retrieving images with image semantics matching the retrieve sentence.

As mentioned above, in addition to the image retrieve based on retrieve words, the image retrieve based on retrieve sentences is also supported in some embodiments of the present disclosure.

In some embodiments, in response to the identified retrieve target is a retrieve sentence, the electronic device retrieves locally an image having an image semantics matching the retrieve sentence, and uses the image as the retrieval result. In some embodiments, the image semantics matching the retrieve sentence includes the image semantics having similarity degrees to semantics of the retrieve sentence not less than the first predetermined similarity degree. The first predetermined similarity degree may be taken as an empirical value by those skilled in the art according to practical needs, and no specific limitation is made in some embodiments of the present disclosure.

Exemplarily, in some embodiments of the present disclosure, the electronic device is pre-configured with a semantic similarity model, which is based on Deep Structured Semantic Model (DSSM) architecture and is obtained by training using machine learning algorithms beforehand. Accordingly, when the electronic device retrieves the image having the semantics matching the retrieve sentence, the retrieve sentence and the image semantics of the image may be input into the semantic similarity model to obtain the similarity degree of the semantic. Then, the image corresponding to the image semantics having a similarity degree to semantics of the retrieve sentence not less than the first predetermined similarity degree is retrieved.

In some embodiments, the semantic similarity model may first express the input image semantics and the retrieve sentence as low-dimensional semantic vectors, and then obtains a cosine distance between the two semantic vectors as the semantic similarity between the image semantics and the retrieve sentence. A formula may be expressed as the following.

$$R(Q,D) = cosine(y_Q, y_D) = \frac{y_Q^T y_D}{\|y_Q\| \|y_D\|}$$

In some embodiments, Q denotes the retrieve sentence, D denotes the image semantics, R(Q, D) denotes the similarity degree between the image semantics and the retrieve sentence, $y_Q$ denotes the semantic vector of the retrieve sentence, and $y_D$ denotes the semantic vector of the image semantics.

For example, as further shown in FIG. 3, when the retrieve target carried by the request is "baseball player throwing a ball", the electronic device may identify the retrieve object as the retrieve sentence, and an image C having an image semantics matching the image semantics of "baseball player throwing a ball" is retrieved as the retrieved result.

As may be seen from the above, in some embodiments of the present disclosure, an input request for retrieving images may be received, whether the retrieve target carried by the request is a retrieve word or a retrieve sentence may be identified; when the retrieve target is the retrieve word, the images with the image category and/or the image object matching the retrieve word may be retrieved; and when the retrieve target is the retrieve sentence, a text semantics identification may be performed on the retrieve sentence, the text semantics of the retrieve sentence is obtained, and then the image having the image semantics matching the text semantics may be obtained. Thus, in some embodiments of the present disclosure, it is possible to achieve the image retrieve based on the retrieve word and the retrieve sentence, achieve the retrieving and matching of the image category and the image object based on the retrieve word, and achieve the retrieving and matching of the image semantics based on the retrieve sentence. Therefore, compared with the related art, the solution provided in some embodiments of the present disclosure may retrieve images more flexibly.

In some embodiments, retrieving images with image semantics matching the retrieve sentence may include the following operations.

(1) The retrieve sentence may be sent to a semantic matching server, and the semantic matching server may be instructed to match target-image semantics having similarity degrees to semantics of the retrieve sentence not less than a first predetermined similarity degree.

(2) Image identifiers corresponding to the target-image semantics may be obtained from the semantic matching server and the images corresponding to the image identifiers may be retrieved.

It should be noted that, due to the limited processing capability of the electronic device, it would take a long time to calculate the semantic similarity by the electronic device itself, which would result in the electronic device taking a long time to return the retrieved results after receiving the request from the user. Therefore, in some embodiments of the present disclosure, the calculation of the semantic similarity is achieved by the electronic device through a server with improved processing capability.

In some embodiments of the present disclosure, when retrieving an image having the image semantics matching the retrieve sentence, the electronic device first generates a semantic matching request carrying the retrieve sentence according to a message format pre-agreed with the semantic matching server, and sends the semantic matching request to the semantic matching server, instructing the semantic matching server to match the retrieve sentence carried by the semantic matching request to obtain a target image semantics having a similarity degree to semantics of the retrieve sentence not less than the first predetermined similarity degree. In some embodiments, the semantic matching server is a server providing a semantic matching service.

On the other hand, the semantic matching server stores a correspondence between the image identifiers and the image semantics (which describes the image semantics corresponding to all images in the electronic device), and has a semantic similarity model preconfigured therein. After receiving the semantic matching request from the electronic device, the semantic matching server may parse the retrieve sentence from the semantic matching request, and invoke the semantic similarity model to obtain the semantic similarity between the stored image semantics and the retrieve sentence, and further determine the image semantics which has a similarity degree to the semantics of the retrieve sentence not less than the first predetermined similarity degree, mark the image semantics as the target image semantics, and further return the image identifier corresponding to the determined target image semantics to the electronic device.

Accordingly, the electronic device may receive the image identifier returned from the semantic matching server and uses the image identifier to retrieve the corresponding image, i.e., the image having the semantics matching the retrieve sentence.

In some embodiments, the image retrieving method provided by the present disclosure may further include the following operations.

(1) A segmenting process for the retrieve sentence may be performed, to obtain a plurality of segment words.
(2) First similar words having similarity degrees to semantics of the plurality of segment words not less than a second predetermined similarity degree may be obtained.
(3) The segment words of the retrieve sentence may be replaced by the first similar words, to obtain extended retrieve sentences.
(4) The extended retrieve sentences may be recommended.

In some embodiments of the present disclosure, the electronic device, after identifying the retrieve target as the retrieve sentence, may recommend an extended retrieve sentence to the user for image retrieve, in addition to directly performing the image retrieve based on the retrieve sentence.

In this case, after identifying the retrieve target as the retrieve sentence, the electronic device may perform the segmenting process for the retrieve sentence by means of segment tool to obtain the plurality of segment words that constitutes the retrieve sentence. For example, the electronic device may segment the retrieve sentence by means of a Jieba word-segmenting machine.

After obtaining the plurality of segment words forming the retrieve sentence, the electronic device may further obtain the words with a semantic similarity degree to the semantics of the segment words not less than a second predetermined similarity degree, and note these words as the first similar words, and then replace the corresponding segment words in the retrieve sentence with the first similar words to obtain a new retrieve sentence which is noted as the extended retrieve sentence.

After obtaining the extended retrieve sentence for the corresponding retrieve sentence, it is also possible to recommend the extended retrieve sentence to the user.

Exemplarily, the electronic device may display or show the retrieved images after the matching images have been retrieved according to the retrieve sentence. The electronic device may recommend the extended retrieve sentence while showing the retrieved images.

Accordingly, when the recommended extended retrieve sentence is triggered, the electronic device retrieves the images having the image semantics matching the extended retrieve sentence, which may be implemented accordingly with reference to the above embodiments of retrieving images having image semantics matching the retrieve sentence, and will not be repeated here.

In some embodiments, the image retrieving method provided by the present disclosure may further include the following operations.

(1) Second similarity words having similarity degrees to semantic of the retrieve word not less than a third predetermined similarity degree may be obtained.
(2) The second similarity words may be regarded as extended retrieve words, and the extended retrieve words may be recommended.

In some embodiments of the present disclosure, the electronic device, after identifying the retrieve target as the retrieve word, can recommend the extended retrieve words to the user for image retrieve in addition to directly retrieving images based on the retrieve word.

In some embodiments, the electronic device, after identifying the retrieve target as the retrieve word, further obtains the word having a similarity degree to the retrieve word not less than the third predetermined similarity degree, and the word is noted as the second similar word. After that, the electronic device may regard the second similar word as the extended retrieve word, and recommend the extended retrieve word.

Exemplarily, the electronic device displays or shows the retrieved images after retrieving the matching images based on the retrieve words, and recommends the extended retrieve words at the same time.

Accordingly, when the recommended extended retrieve word is triggered, the electronic device retrieves the images having the image category and/or the image object matching the extended retrieve word, which may be implemented accordingly with reference to the ways in which retrieving the images with the image category and/or image object matching the retrieve word in the above embodiments, and will not be repeated here.

In some embodiments, the image retrieving method provided by the present disclosure may further include the following operations.

(1) To-be-labeled images which need to be labeled may be acquired during an image-labeling period.
(2) The to-be-labeled images may be classified based on an image classification model, and image categories of the to-be-labeled images may be obtained.
(3) Object recognition may be performed for the to-be-labeled images based on an object recognition model, and objects included in the to-be-labeled images may be obtained.
(4) Image-semantics recognition may be performed for the to-be-labeled images based on an image-semantics recognition model, and image semantics of the to-be-labeled images may be obtained.

It should be noted that, in some embodiments of the present disclosure, the electronic device may be preconfigured with the image classification model for labeling the image categories, an object recognition model for labeling the image objects, and an image-semantic recognition model for labeling the image semantics.

The image classification model may be obtained by using a lightweight neural network as a basic architecture of the model, and training the lightweight neural network through the machine learning algorithms. The image classification model may be configured to recognize the categories of the body of the image, such as blue sky, sea, beach, etc. In some embodiments, a lightweight convolutional neural network, such as MobileNet, SqueezeNet, ShuffleNet, or the like, may be adopted for training to obtain the image classification model.

The object recognition model may be obtained by using a single shot detector (SSD) model as the basic architecture and training the SSD through the machine learning algorithm. For example, an open database Open Images may be used to train the SSD to obtain the object recognition model. The object recognition model is configured to recognize the objects in the images, such as people, household items, plants and animals, etc.

The image-semantic recognition model may be obtained by using a deep multimodal similarity model (DMSM) as the basic architecture and training the DMSM through the machine learning algorithm. The image-semantic recognition model may be configured to recognize the image semantics of an image. It will be appreciated that in complex scenarios, commonly-used words are hardly able to describe what is happening in the image. For this reason, the dimension of image semantics is added as additional information in some embodiments of the present disclosure.

Based on the pre-built image classification model, object recognition model and image-semantic recognition model, the electronic device periodically label the images.

In some embodiments, when the image-labeling period is reached, the electronic device first determines the image that currently needs to be labeled as the to-be-labeled image, and obtains the to-be-labeled image. The image-labeling period may be set by a person of ordinary skill in the art according to actual needs, and there is no specific limitation in some embodiments of the present disclosure. For example, in some embodiments of the present disclosure, the image-labeling period is set to be one natural day, i.e. 24 hours.

After obtaining the to-be-labeled image, the electronic device further classifies the to-be-labeled image based on the image classification model to obtain the image category of the to-be-labeled image, performs the object recognition for the to-be-labeled image based on the object recognition model to obtain the objects included in the to-be-labeled image, and performs the image semantic recognition for the to-be-labeled image based on the image-semantic recognition model to obtain the image semantics of the to-be-labeled image.

In an embodiment, the operation of performing the image-semantics recognition for the to-be-labeled images based on the image-semantics recognition model, and obtaining the image semantics of the to-be-labeled images may include the following operations.

(1) The to-be-labeled images may be sent to an image-semantics recognition server, the image-semantics recognition server may be instructed to invoke an image-semantics recognition model for performing image-semantics recognition for the to-be-labeled images, and image semantics of the to-be-labeled image may be obtained.

(2) The image semantics of the to-be-labeled images may be obtained from the image-semantics recognition server.

It should be noted that, due to the limited processing capability of the electronic device, the recognition of the image semantics by the electronic device itself would take a long time and would more likely affect the normal use of the electronic device. Therefore, in some embodiments, the electronic device may achieve the recognition of the image semantics through a server with improved processing capability.

In some embodiments of the present disclosure, when performing the image-semantic recognition for the to-be-labeled image, the electronic device first generates a semantic recognition request carrying the to-be-labeled image in accordance with a message format pre-agreed with the image-semantic recognition server, and sends the semantic recognition request to the image-semantic recognition server, instructing the image-semantic recognition server to perform the image semantic recognition for the to-be-labeled image carried by the semantic recognition request, in order to obtain the image semantics of the to-be-labeled image. In some embodiments, the image-semantic recognition server is a server providing an image-semantic recognition service.

On the other hand, the image-semantic recognition server is pre-configured with the image-semantic recognition model. After receiving the semantic recognition request from the electronic device, the image-semantic recognition server may parse the to-be-labeled image from the semantic recognition request, invokes the image-semantic recognition model to perform the image semantic recognition for the to-be-labeled image, obtains the image semantic of the to-be-labeled image, and returns the image semantic of the to-be-labeled image to the electronic device.

Accordingly, the electronic device receives the image semantics of the to-be-labeled image returned from the image-semantic recognition server.

In an embodiment, the operation of acquiring to-be-labeled images which need to be labeled may include the following operations.

New-added images during the image-labeling period may be regarded as the to-be-labeled images.

In some embodiments of the present disclosure, when acquiring the to-be-labeled image which need to be labeled, the electronic device may directly use the images newly added during the image-labeling period as the to-be-labeled images. For example, if 20 images are newly added to the electronic device during the image-labeling period, the electronic device may use these 20 images as the to-be-labeled images which need to be labeled.

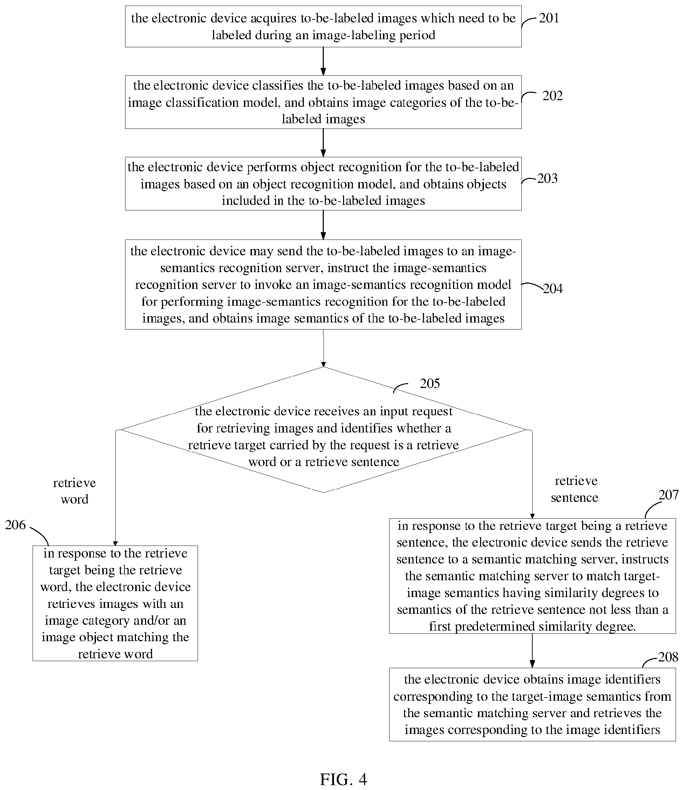

As shown in FIG. 4, the image retrieving method provided in some embodiments of the present disclosure may further include the following operations.

In operation 201, the electronic device acquires to-be-labeled images which need to be labeled during an image-labeling period.

In some embodiments, when the image-labeling period is reached, the electronic device first determines the image that currently needs to be labeled as the to-be-labeled image, and obtains the to-be-labeled image. The image-labeling period may be set by a person of ordinary skill in the art according to actual needs, and there is no specific limitation in some embodiments of the present disclosure. For example, in some embodiments of the present disclosure, the image-labeling period is set to be one natural day, i.e. 24 hours.

In operation 202, the electronic device classifies the to-be-labeled images based on an image classification model, and obtains image categories of the to-be-labeled images.

It should be noted that the image category is configured to describe the category of a body in the image. In some embodiments of the present disclosure, the image classification model may be pre-configured in the electronic device for labeling the image category. The image classification model may be obtained by using the lightweight neural network as the basic architecture of the model and training the lightweight neural network by the machine learning algorithm. The image classification model may be configured to recognize the category of the body of the image, such as blue sky, sea, beach, etc. In some embodiments, a lightweight convolutional neural network, such as MobileNet, SqueezeNet, ShuffleNet, or the like, may be adopted for training to obtain the image classification model.

Accordingly, after acquiring the to-be-labeled image which need to be labeled, the electronic device further classifies the which need to be labeled image based on the image classification model to obtain the image category of the to-be-labeled image.

In operation 203, the electronic device performs object recognition for the to-be-labeled images based on an object recognition model, and obtains objects included in the to-be-labeled images.

In some embodiments, the image object is configured to describe an object present in an image. In some embodiments of the present disclosure, the object recognition model may also be configured or used in the electronic device for labeling the image objects. The object recognition model is obtained by using the SSD model as the basic architecture and training the SSD by the machine learning algorithm. For example, the SSD may be trained by using the open database Open Images to obtain the object recognition model. The object recognition model is configured to recognize the objects in the image, such as people, household objects, plants and animals, etc.

Accordingly, after acquiring the to-be-labeled images which need to be labeled, the electronic device also performs object recognition for the to-be-labeled images based on the object recognition model to obtain the objects included in the to-be-labeled images.

In operation 204, the electronic device may send the to-be-labeled images to an image-semantics recognition server, instruct the image-semantics recognition server to invoke an image-semantics recognition model for performing image-semantics recognition for the to-be-labeled images, and obtains image semantics of the to-be-labeled images.

In some embodiments, the image semantics are configured to describe the content occurred in an image, and represented by sentences. The electronic device also labels the image semantics of the to-be-labeled images. It should be noted that, due to the limited processing capability of the electronic device, the recognition of the image semantics by the electronic device itself would take a longer recognition time and would more likely affect the normal use of the electronic device. Therefore, in some embodiments of the present disclosure, the recognition of image semantics may be achieved by the electronic device implements through a server with improved processing capability.

In some embodiments of the present disclosure, when performing the image-semantic recognition for the to-be-labeled image, the electronic device first generates a semantic recognition request carrying the to-be-labeled image in accordance with a message format pre-agreed with the image-semantic recognition server, sends the semantic recognition request to the image-semantic recognition server, and instructs the image-semantic recognition server to perform the image semantic recognition for the to-be-labeled images carried by the semantic recognition request, in order to obtain the image semantics of the to-be-labeled images. In some embodiments, the image-semantic recognition server is a server providing an image-semantic recognition service.

On the other hand, the image-semantic recognition server is pre-configured with an image-semantic recognition model. After receiving the semantic recognition request from the electronic device, the image-semantic recognition server parses the to-be-labeled images from the semantic recognition request, invokes the image-semantic recognition model to perform the image semantic recognition for the to-be-labeled images, obtains the image semantic of the to-be-labeled images, and returns the image semantic of the to-be-labeled images to the electronic device.

Accordingly, the electronic device receives the image semantics of the to-be-labeled images returned from the image-semantic recognition server.

In operation 205, the electronic device receives an input request for retrieving images and identifies whether a retrieve target carried by the request is a retrieve word or a retrieve sentence.

It should be noted that, the request for retrieving images may be input by various methods which may include but be not limited to voice input methods, touch input methods, etc., which may not be limited in some embodiments of the present disclosure.

For example, the user may speak the voice "find an image of **". When the electronic device receives the voice, the electronic device may parse the voice into the electronic device may.

As shown in FIG. 2, for another example, the electronic device is provided with an image retrieving interface. The image retrieving interface may include an input control in form of an input box. The user may enter a retrieve target for describing a desired image via the input control, such as a retrieve word and a retrieve sentence. In addition, the image retrieving interface is provided with a search control. After the user has input the retrieve target via the input control, the search control may be triggered to generate the request for retrieving images. The request for retrieving images includes a retrieve target input by the user. The retrieve target may be a retrieve word or a retrieve sentence.

In some embodiments, after receiving the input request for retrieving images, the electronic device further identifies whether the retrieve target carried by the request is the retrieve word or the retrieve sentence.

Exemplarily, after receiving the input request for retrieving images, the electronic device may parse the retrieve target carried by the request, compare the retrieve target with common words pre-stored in a thesaurus, and determine that the retrieve target is a retrieve word in response to the retrieve target being one of the common words pre-stored in the thesaurus, otherwise determine that the retrieve target is a retrieve sentence in response to the retrieve target not being one of the common words pre-stored in the thesaurus.

It will be appreciated that those skilled in the art may also define the ways in which the retrieve words and the retrieve sentences are divided according to practical needs, which will not be specifically limited in some embodiments of the present disclosure.

In operation 206, in response to the retrieve target being the retrieve word, the electronic device retrieves images with an image category and/or an image object matching the retrieve word.

It should be noted that in order to enable image retrieving, the images in some embodiments of the present disclosure are pre-labeled in different dimensions, including at least image categories, image objects, and image semantics. The images are labeled in manual ways, machine labeling ways, or the like, which may not be specifically limited in some embodiments of the present disclosure.

In some embodiments, an image category may be configured to describe a category of a body in an image. An image object is configured to describe an object present in the image. The image category and the image object are represented by corresponding words. The image semantics is configured to describe content occurred in an image and represented by sentences.

For example, with reference to FIG. 3, three images are used to illustrate the present disclosure in multiple dimensions involved. In some embodiments, the image category of an image A may be blue sky, the image objects of an image B may include "blue sky" and "reeds", and the image semantics of an image C may be "baseball player is throwing a ball".

Accordingly, in some embodiments of the present disclosure, when identifying that the retrieve target carried by the request is the retrieve word, the electronic device may locally retrieve images with an image category and/or an image object matching the retrieve word. It should be noted that the image category matching the retrieval word may be that the image category is identical to the retrieval word, or that the similarity degrees between the image category and the retrieval word reaches or is not less than a first predetermined similarity degree. The first predetermined similarity degree may be set by those skilled in the art according to practical needs, and may not be specifically limited in some embodiments of the present disclosure.

For example, taking the three images shown in FIG. 3 as an example, when the retrieve target carried by the request is "blue sky", the electronic device may identify the retrieve object as the retrieve word. An image A having an image category matching the image category "blue sky" and an image B having an image object matching the image object "blue sky" may be retrieved as a retrieved result.

In operation 207, in response to the retrieve target being a retrieve sentence, the electronic device sends the retrieve sentence to a semantic matching server, instructs the semantic matching server to match target-image semantics having similarity degrees to semantics of the retrieve sentence not less than a first predetermined similarity degree.

In operation 208, the electronic device obtains image identifiers corresponding to the target-image semantics from the semantic matching server and retrieves the images corresponding to the image identifiers.

As mentioned above, in addition to the image retrieve based on retrieve words, the image retrieve based on retrieve sentences is also supported in some embodiments of the present disclosure.

In some embodiments, in response to the identified retrieve target is a retrieve sentence, the electronic device retrieves locally an image having an image semantics matching the retrieve sentence, and uses the image as the retrieval result. In some embodiments, the image semantics matching the retrieve sentence includes the image semantics having similarity degrees to semantics of the retrieve sentence not less than the first predetermined similarity degree. The first predetermined similarity degree may be taken as an empirical value by those skilled in the art according to practical needs, and no specific limitation is made in some embodiments of the present disclosure.

It should be noted that, due to the limited processing capability of the electronic device, it would take a long time to calculate the semantic similarity by the electronic device itself, which would result in the electronic device taking a long time to return the retrieved results after receiving the request from the user. Therefore, in some embodiments of the present disclosure, the calculation of the semantic similarity is achieved by the electronic device through a server with improved processing capability.

In some embodiments of the present disclosure, when retrieving an image having the image semantics matching the retrieve sentence, the electronic device first generates a semantic matching request carrying the retrieve sentence according to a message format pre-agreed with the semantic matching server, and sends the semantic matching request to the semantic matching server, instructing the semantic matching server to match the retrieve sentence carried by the semantic matching request to obtain a target image semantics having a similarity degree to semantics of the retrieve sentence not less than the first predetermined similarity degree. In some embodiments, the semantic matching server is a server providing a semantic matching service.

On the other hand, the semantic matching server stores a correspondence between the image identifiers and the image semantics (which describes the image semantics corresponding to all images in the electronic device), and has a semantic similarity model preconfigured therein. After receiving the semantic matching request from the electronic device, the semantic matching server may parse the retrieve sentence from the semantic matching request, and invoke the semantic similarity model to obtain the semantic similarity between the stored image semantics and the retrieve sentence, and further determine the image semantics which has a similarity degree to the semantics of the retrieve sentence not less than the first predetermined similarity degree, mark the image semantics as the target image semantics, and further return the image identifier corresponding to the determined target image semantics to the electronic device.

Accordingly, the electronic device may receive the image identifier returned from the semantic matching server and uses the image identifier to retrieve the corresponding image, i.e., the image having the semantics matching the retrieve sentence.

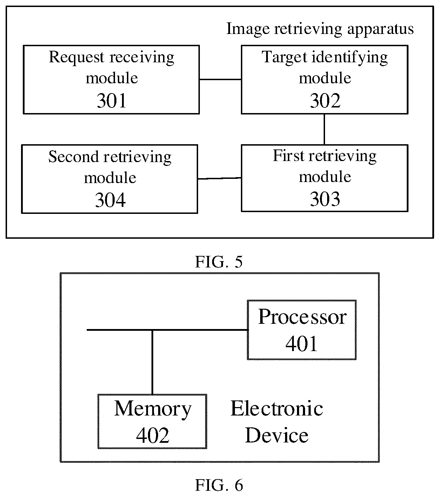

In some embodiments, an image retrieving apparatus is also provided. As shown in FIG. 5, FIG. 5 is a schematic diagram of the structure of the image retrieving apparatus provided in some embodiments of the present disclosure. In some embodiments, the image retrieving apparatus is applied to the electronic device. The image retrieving apparatus includes a request receiving module 301, a target identifying module 302, a first retrieving module 303, and a second retrieving module 304, as follows.

The request receiving module 301 is configured to receive an input request for retrieving images.

The target identifying module 302 is configured to identify whether a retrieve target carried by the request is a retrieve word or a retrieve sentence.

The first retrieving module 303 is configured to retrieve images with an image category and/or an image object matching the retrieve word in response to the retrieve target being the retrieve word.

The second retrieving module 304 is configured to retrieve images with image semantics matching the retrieve sentence in response to the retrieve target being the retrieve sentence.

In some embodiments, in retrieving images with image semantics matching the retrieve sentence, the second retrieving module 304 is configured to execute the following operations.

The retrieve sentence may be sent to a semantic matching server, and the semantic matching server may be instructed to match target-image semantics having similarity degrees to semantics of the retrieve sentence not less than a first predetermined similarity degree.

Image identifiers corresponding to the target-image semantics may be obtained and the images corresponding to the image identifiers may be retrieved.

In some embodiments, the image retrieving apparatus provided by the present disclosure further includes a first recommendation module. The first recommendation module is configured to execute the following operations.

A segmenting process may be performed for the retrieve sentence, to obtain a plurality of segment words.

First similar words having similarity degrees to semantics of the segment words not less than a second predetermined similarity degree may be obtained.

The segment words of the retrieve sentence may be replaced by the first similar words, to obtain extended retrieve sentences.

The extended retrieve sentences may be recommended.

In some embodiments, the image retrieving apparatus provided by the present disclosure further includes a second recommendation module. The second recommendation module is configured to execute the following operations.

Second similarity words having similarity degrees to semantic of the retrieve word not less than a third predetermined similarity degree may be obtained.

The second similarity words may be regarded as extended retrieve words, and the extended retrieve words may be recommended.

In some embodiments, the image retrieving apparatus provided by the present disclosure further apparatus a labeling module. The labeling module is configured to execute the following operations.

To-be-labeled images which need to be labeled may be acquired during an image-labeling period.

The to-be-labeled images may be classified based on an image classification model, and image categories of the to-be-labeled images may be obtained.

Object recognition may be performed for the to-be-labeled images based on an object recognition model, and objects included in the to-be-labeled images may be obtained.

Image-semantics recognition may be performed for the to-be-labeled images based on an image-semantics recognition model, and image semantics of the to-be-labeled images may be obtained.

In some embodiments, in performing image-semantics recognition for the to-be-labeled images based on the image-semantics recognition model and obtaining the image semantics of the to-be-labeled images, the labeling module is configured to execute the following operations.

The to-be-labeled images may be sent to an image-semantics recognition server, the image-semantics recognition server may be instructed to invoke an image-semantics recognition model for performing image-semantics recognition for the to-be-labeled images, and image semantics of the to-be-labeled image may be obtained.

The image semantics of the to-be-labeled images may be obtained from the image-semantics recognition server.

In some embodiments, in acquiring to-be-labeled images which need to be labeled, the labeling module is configured to execute the following operations.

New-added images during the image-labeling period may be regarded as the to-be-labeled images.

It should be noted that, the image retrieving apparatus provided by some embodiments of the present disclosure has the same conception as the image retrieving method in the above embodiments, and any of the methods provided in the embodiments of the image retrieving method may be run on the image retrieving apparatus, the detailed implementation process of which is detailed in the above embodiments and will not be repeated here.

In some embodiments, an electronic device is also provided. As shown in FIG. 6, the electronic device may include a processor 401 and a memory 402.

The processor 401 in some embodiments of the present disclosure is a general-purpose processor, such as a processor of an ARM (Advanced RISC Machine) architecture.

A computer program is stored in the memory 402. The memory 402 may be a highspeed random access memory, and may also be a non-volatile memory, such as at least one disk memory device, a flash memory device, or other volatile solid state memory device, etc. Accordingly, the memory 402 may further include a memory controller to provide access of the processor 401 to the computer program in the memory 402, to achieve the following functions.

An input request for retrieving images may be received.

Whether a retrieve target carried by the request is a retrieve word or a retrieve sentence may be identified.

In response to the retrieve target being the retrieve word, images with an image category or an image object matching the retrieve word may be retrieved.

In response to the retrieve target being a retrieve sentence, images with image semantics matching the retrieve sentence may be retrieved.

In some embodiments, in retrieving images with image semantics matching the retrieve sentence, the processor 401 is configured to perform the following operations.

The retrieve sentence may be sent to a semantic matching server, and the semantic matching server may be instructed to match target-image semantics having similarity degrees to semantics of the retrieve sentence not less than a first predetermined similarity degree.

Image identifiers corresponding to the target-image semantics may be obtained from the semantic matching server, and the images corresponding to the image identifiers may be retrieved.

In some embodiments, the processor 401 is further configured to perform the following operations.

A segmenting process may be performed for the retrieve sentence, to obtain a plurality of segment words.

First similar words having similarity degrees to semantics of the segment words not less than a second predetermined similarity degree may be obtained.

The segment words of the retrieve sentence may be replaced by the first similar words, to obtain extended retrieve sentences.

The extended retrieve sentences may be recommended.

In some embodiments, the processor 401 is further configured to perform the following operations.

Second similarity words having similarity degrees to semantic of the retrieve word not less than a third predetermined similarity degree may be obtained.

The second similarity words may be regarded as extended retrieve words, and the extended retrieve words may be recommended.

In some embodiments, the processor 401 is further configured to perform the following operations.

To-be-labeled images which need to be labeled may be acquired during an image-labeling period,

The to-be-labeled images may be classified based on an image classification model, and image categories of the to-be-labeled images may be obtained.

Object recognition may be performed for the to-be-labeled images based on an object recognition model, and objects included in the to-be-labeled images may be obtained.

Image-semantics recognition may be performed for the to-be-labeled images based on an image-semantics recognition model, and image semantics of the to-be-labeled images may be obtained.

In some embodiments, when in performing image-semantics recognition for the to-be-labeled images based on an image-semantics recognition model and obtaining image semantics of the to-be-labeled images, the processor 401 is configured to perform the following operations.

The to-be-labeled images may be sent to an image-semantics recognition server, the image-semantics recognition server may be instructed to invoke an image-semantics recognition model for performing image-semantics recognition for the to-be-labeled images, and image semantics of the to-be-labeled image may be obtained.

The image semantics of the to-be-labeled images from the image-semantics recognition server may be obtained.

In some embodiments, in acquiring to-be-labeled images which need to be labeled, the processor 401 is configured to perform the following operations.

New-added images during the image-labeling period may be regarded as the to-be-labeled images.

It should be noted that the electronic device provided by some embodiments of the present disclosure has the same conception as the image retrieving method in the above embodiments, and any of the methods provided in the embodiments of the image retrieving method may be run on the electronic device, the detailed implementation of which is described in the feature extraction method embodiment and will not be repeated here.

It is to be noted that for the image retrieving method of an embodiment of the present disclosure, it is understood by a person of ordinary test in the art that all or part of the processes for implementing the image retrieving method of an embodiment of the present disclosure may be accomplished by controlling relevant hardware by means of a computer program. The computer program may be stored in a computer readable storage medium, such as in the memory of an electronic device, and be executed by a processor and/or a dedicated speech recognition chip in the electronic device. The execution processes may include the processes as described in embodiments of the image retrieving method. In some embodiments, the storage medium may be a disk, an optical disk, a read-only memory, a random access memory, etc.

The above embodiments of this present disclosure provide a detailed description of the image retrieving method, apparatus, storage media, and electronic device. Principles and implementations of the present disclosure are described with specific embodiments. The above descriptions are only intended to assist in the understanding of the method and the core ideas, at the same time, for those skilled in the art, there may be changes in the specific implementation and the application scope of present disclosure based on the ideas of the present disclosure. In conclusion, the content of the specification should not be construed as a limitation to the present disclosure.

**Claims**

1. An image retrieving method, applied to an electronic device and comprising:

   receiving an input request for retrieving images;
   identifying whether a retrieve target carried by the request is a retrieve word or a retrieve sentence;
   in response to the retrieve target being the retrieve word, retrieving images with an image category and/or an image object matching the retrieve word; and
   in response to the retrieve target being the retrieve sentence, retrieving images with image semantics matching the retrieve sentence.

2. The image retrieving method as claimed in claim 1, wherein the retrieving images with image semantics matching the retrieve sentence, comprises:

   sending the retrieve sentence to a semantic matching server, instructing the semantic matching server to match target-image semantics having similarity degrees to semantics of the retrieve sentence not less than a first predetermined similarity degree; and
   obtaining image identifiers corresponding to the target-image semantics from the semantic matching server and retrieving the images corresponding to the image identifiers.

3. The image retrieving method as claimed in claim1, further comprising:

   performing a segmenting process for the retrieve sentence, to obtain a plurality of segment words;
   obtaining first similar words having similarity degrees to semantics of the plurality of segment words not less than a second predetermined similarity degree;
   replacing the plurality of segment words of the retrieve sentence by the first similar words, to obtain extended retrieve sentences; and
   recommending the extended retrieve sentences.

4. The image retrieving method as claimed in claim 3, wherein, after the retrieving images with image semantics matching the retrieve sentence, the method further comprises:

> showing the retrieved images; and
> wherein the recommending the extended retrieve sentences comprises:
> recommending the extended retrieve sentences while showing the retrieved images.

5. The image retrieving method as claimed in claim 1, further comprising:

> obtaining second similarity words having similarity degrees to semantic of the retrieve word not less than a third predetermined similarity degree; and
> regarding the second similarity words as extended retrieve words, and recommending the extended retrieve words.

6. The image retrieving method as claimed in claim 1, further comprising:

> acquiring to-be-labeled images which need to be labeled during an image-labeling period;
> classifying the to-be-labeled images based on an image classification model, and obtaining image categories of the to-be-labeled images;
> performing object recognition for the to-be-labeled images based on an object recognition model, and obtaining objects included in the to-be-labeled images; and
> performing image-semantics recognition for the to-be-labeled images based on an image-semantics recognition model, and obtaining image semantics of the to-be-labeled images.

7. The image retrieving method as claimed in claim 6, wherein, the performing image-semantics recognition for the to-be-labeled images based on an image-semantics recognition model, and obtaining image semantics of the to-be-labeled images, comprising:

> sending the to-be-labeled images to an image-semantics recognition server, instructing the image-semantics recognition server to invoke an image-semantics recognition model for performing image-semantics recognition for the to-be-labeled images, and obtaining image semantics of the to-be-labeled images; and
> obtaining the image semantics of the to-be-labeled images from the image-semantics recognition server.

8. The image retrieving method as claimed in claim 6, wherein the acquiring to-be-labeled images which need to be labeled, comprises:

regarding new-added images during the image-labeling period as the to-be-labeled images.

9. The image retrieving method as claimed in claim 1, wherein identifying whether a retrieve target carried by the request is a retrieve word or a retrieve sentence, comprises:
comparing the retrieve target with common words pre-stored in a thesaurus, determining that the retrieve target is a retrieve word in response to the retrieve target being one of the common words pre-stored in the thesaurus, and determining that the retrieve target is a retrieve sentence in response to the retrieve target not being one of the common words pre-stored in the thesaurus.

10. An image retrieving apparatus, applied in an electronic device, and the image retrieving apparatus comprising:

> a request receiving module, configured to receive an input request for retrieving images;
> a target identifying module, configured to identify whether a retrieve target carried by the request is a retrieve word or a retrieve sentence;
> a first retrieving module, configured to retrieve images with an image category and/or an image object matching the retrieve word in response to the retrieve target being the retrieve word; and
> a second retrieving module, configured to retrieve images with image semantics matching the retrieve sentence in response to the retrieve target being the retrieve sentence.

11. A storage media having a computer program stored thereon, wherein when the computer program is loaded by a processor, the processor is caused to execute:

> receiving an input request for retrieving images;
> identifying whether a retrieve target carried by the request is a retrieve word or a retrieve sentence;
> in response to the retrieve target being the retrieve word, retrieving images with an image category and/or an image object matching the retrieve word; and
> in response to the retrieve target being a retrieve sentence, retrieving images with image semantics matching the retrieve sentence.

12. An electronic device comprising a processor and a memory, the memory storing a computer program, wherein the processor, by loading the computer program, is configured to execute:

> receiving an input request for retrieving images;
> identifying whether a retrieve target carried by the request is a retrieve word or a retrieve sentence;

in response to the retrieve target being the retrieve word, retrieving images with an image category and/or an image object matching the retrieve word; and

in response to the retrieve target being a retrieve sentence, retrieving images with image semantics matching the retrieve sentence.

13. The electronic device as claimed in claim 12, wherein, in retrieving images with image semantics matching the retrieve sentence, the processor is configured to execute:

sending the retrieve sentence to a semantic matching server, instructing the semantic matching server to match target-image semantics having similarity degrees to semantics of the retrieve sentence not less than a first predetermined similarity degree; and

obtaining image identifiers corresponding to the target-image semantics from the semantic matching server and retrieving the images corresponding to the image identifiers.

14. The electronic device as claimed in claim 12, wherein, the processor is configured to execute:

performing a segmenting process for the retrieve sentence, to obtain a plurality of segment words;

obtaining first similar words having similarity degrees to semantics of the plurality of segment words not less than a second predetermined similarity degree;

replacing the plurality of segment words of the retrieve sentence by the first similar words, to obtain extended retrieve sentences; and

recommending the extended retrieve sentences.

15. The electronic device as claimed in claim 14, wherein, after the retrieving images with image semantics matching the retrieve sentence, the processor is configured to execute:

showing the retrieved images; and
in the recommending the extended retrieve sentences, the processor is configured to execute:
recommending the extended retrieve sentences while showing the retrieved images.

16. The electronic device as claimed in claim 12, wherein, the processor is configured to execute:

obtaining second similarity words having similarity degrees to semantic of the retrieve word not less than a third predetermined similarity degree; and

regarding the second similarity words as extended retrieve words, and recommending the extended retrieve words.

17. The electronic device as claimed in claim 12, wherein, the processor is configured to execute:

acquiring to-be-labeled images which need to be labeled during an image-labeling period;

classifying the to-be-labeled images based on an image classification model, and obtaining image categories of the to-be-labeled images;

performing object recognition for the to-be-labeled images based on an object recognition model, and obtaining objects included in the to-be-labeled images; and

performing image-semantics recognition for the to-be-labeled images based on an image-semantics recognition model, and obtaining image semantics of the to-be-labeled images.

18. The electronic device as claimed in claim 17, wherein, in performing image-semantics recognition for the to-be-labeled images based on an image-semantics recognition model, and obtaining image semantics of the to-be-labeled images the processor is configured to execute:

sending the to-be-labeled images to an image-semantics recognition server, instructing the image-semantics recognition server to invoke an image-semantics recognition model for performing image-semantics recognition for the to-be-labeled images, and obtaining image semantics of the to-be-labeled image; and

obtaining the image semantics of the to-be-labeled images from the image-semantics recognition server.

19. The electronic device as claimed in claim 17, wherein in acquiring to-be-labeled images which need to be labeled, the processor is configured to execute:
regarding new-added images during the image-labeling period as the to-be-labeled images.

20. The electronic device as claimed in claim 12, wherein in identifying whether a retrieve target carried by the request is a retrieve word or a retrieve sentence, the processor is used to execute:
comparing the retrieve target with common words pre-stored in a thesaurus, determining that the retrieve target is a retrieve word in response to the retrieve target being one of the common words pre-stored in a thesaurus, and determining that the retrieve target is a retrieve sentence in response to the retrieve target not being one of the common words pre-stored in the thesaurus.

receiving an input request for retrieving images  ⌐101

identifying whether a retrieve target
carried by the request is a retrieve word
or a retrieve sentence  ⌐102

retrieve
sentence

retrieve
word

104 ⌐ in response to the retrieve
target being a retrieve
sentence, retrieving images
with image semantics matching the retrieve sentence in response to the retrieve
target being the retrieve word,
retrieving images with an
image category and/or an
image object matching the

retrieve word  ⌐103

FIG. 1

Input
control

Blue Sky

Search
control

FIG. 2

Image A

Image B

Image C

FIG. 3

the electronic device acquires to-be-labeled images which need to be labeled during an image-labeling period ⌐ 201

the electronic device classifies the to-be-labeled images based on an image classification model, and obtains image categories of the to-be-labeled images ⌐ 202

the electronic device performs object recognition for the to-be-labeled images based on an object recognition model, and obtains objects included in the to-be-labeled images ⌐203

the electronic device may send the to-be-labeled images to an image-semantics recognition server, instruct the image-semantics recognition server to invoke an image-semantics recognition model for performing image-semantics recognition for the to-be-labeled images, and obtains image semantics of the to-be-labeled images ⌐204

the electronic device receives an input request for retrieving images and identifies whether a retrieve target carried by the request is a retrieve word or a retrieve sentence ⌐ 205

retrieve word

retrieve sentence 207

206

in response to the retrieve target being the retrieve word, the electronic device retrieves images with an image category and/or an image object matching the retrieve word in response to the retrieve target being a retrieve sentence, the electronic device sends the retrieve sentence to a semantic matching server, instructs the semantic matching server to match target-image semantics having similarity degrees to semantics of the retrieve sentence not less than a first predetermined similarity degree.

208

the electronic device obtains image identifiers corresponding to the target-image semantics from the semantic matching server and retrieves the images corresponding to the image identifiers

FIG. 4

Image retrieving apparatus

| Request receiving module 301 | Target identifying module 302 |
|---|---|
| Second retrieving module 304 | First retrieving module 303 |

FIG. 5

Processor 401

Memory 402

Electronic Device

FIG. 6

## INTERNATIONAL SEARCH REPORT

| International application No. |
|---|
| **PCT/CN2020/134620** |

### A. CLASSIFICATION OF SUBJECT MATTER

G06F 16/532(2019.01)i； L06F 16/58(2019.01)i；G06F 40/289(2020.01)i；G06F 40/30(2020.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPI, EPODOC, CNPAT, IEEE, CNKI, 百度: 图像, 搜索, 检索, 词, 句, 匹配, 类别, 属性, 语义, 分析, 分词, 扩展, 相似度, 标定, 标注, image, search, retrieval, word, sentence, match, category, attribute, semantic, analyse, segmentation, extend, similarity, target, label

### C. DOCUMENTS CONSIDERED TO BE RELEVANT

| Category* | Citation of document, with indication, where appropriate, of the relevant passages | Relevant to claim No. |
|---|---|---|
| PX | CN 111046203 A (GUANGDONG OPPO MOBILE TELECOMMUNICATIONS CORP., LTD.) 21 April 2020 (2020-04-21) claims 1-10, description paragraphs [0033], [0073] | 1-20 |
| Y | CN 104462212 A (BAIDU ONLINE NETWORK TECHNOLOGY (BEIJING) CO., LTD.) 25 March 2015 (2015-03-25) description paragraphs [0032]-[0057], [0059]-[0064], [0075]-[0078], [0114], [0202]-[0203] | 1-20 |
| Y | CN 102110126 A (PAN, Xiaomei) 29 June 2011 (2011-06-29) description, paragraphs [0014]-[0038] | 1-20 |
| A | CN 110399515 A (SUN YAT-SEN UNIVERSITY) 01 November 2019 (2019-11-01) entire document | 1-20 |
| A | CN 108959314 A (XI'AN S&T BIG MARKET INNOVATION CLOUD SERVICE CO., LTD.) 07 December 2018 (2018-12-07) entire document | 1-20 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 February 2021** | **10 March 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/134620**

**C.    DOCUMENTS CONSIDERED TO BE RELEVANT**

| Category* | Citation of document, with indication, where appropriate, of the relevant passages | Relevant to claim No. |
|---|---|---|
| A | CN 110096641 A (SHENZHEN ONECONNECT TECHNOLOGY CO., LTD.) 06 August 2019 (2019-08-06)<br>    entire document | 1-20 |
| A | US 2010094845 A1 (MOON, Jin Young et al.) 15 April 2010 (2010-04-15)<br>    entire document | 1-20 |
| A | US 2003103675 A1 (FUJITSU LIMITED) 05 June 2003 (2003-06-05)<br>    entire document | 1-20 |

Form PCT/ISA/210 (second sheet) (January 2015)

## INTERNATIONAL SEARCH REPORT
### Information on patent family members

International application No.

**PCT/CN2020/134620**

| Patent document cited in search report | | | Publication date (day/month/year) | Patent family member(s) | | | Publication date (day/month/year) |
|---|---|---|---|---|---|---|---|
| CN | 111046203 | A | 21 April 2020 | None | | | |
| CN | 104462212 | A | 25 March 2015 | CN | 104462212 | B | 22 December 2017 |
| CN | 102110126 | A | 29 June 2011 | None | | | |
| CN | 110399515 | A | 01 November 2019 | None | | | |
| CN | 108959314 | A | 07 December 2018 | None | | | |
| CN | 110096641 | A | 06 August 2019 | None | | | |
| US | 2010094845 | A1 | 15 April 2010 | KR | 20100041482 | A | 22 April 2010 |
| | | | | KR | 101040119 | B1 | 09 June 2011 |
| US | 2003103675 | A1 | 05 June 2003 | GB | 2384078 | A | 16 July 2003 |
| | | | | GB | 2384078 | B | 14 April 2004 |
| | | | | JP | 2003167914 | A | 13 June 2003 |
| | | | | US | 7167823 | B2 | 23 January 2007 |
| | | | | GB | 0227434 | D0 | 31 December 2002 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911261651